# EUROPÄISCHE PATENTANMELDUNG

(11) **EP 2 428 760 A2**
(43) Veröffentlichungstag der Anmeldung: **14.03.2012**
(21) Anmeldenummer: 11180741.8
(22) Anmeldetag: 09.09.2011
(51) Int. Cl.: F28D 20/00, F28D 20/02

(54) **Erdspeichertank für ein Energiespeichersystem**

(30) Priorität: 10.09.2010 DE 102010037477
(71) Anmelder: Hammer Heizungsbau-GmbH, 88046 Friedrichshafen (DE)
(72) Erfinder: Von Rohr, Alexander, 88045 Friedrichshafen (DE)
(74) Vertreter: Kaufmann, Ursula Josefine

(57) **Zusammenfassung**

Die Erfindung betrifft einen Erdspeichertank (10) mit einem einen Innenraum umgebenden Gehäuse (12), wobei der Speichertank (10) zum Einbau ins Erdreich (50) vorgesehen ist, und wobei der Innenraum zur Aufnahme eines Speichermediums (30) und wenigstens einer ersten Wärmetauscheranordnung (100) in Kontakt mit dem Speichermedium (30), vorgesehen ist, wobei der Erdspeichertank (10) zum Transport, insbesondere zum Straßentransport, ausgebildet ist. Der Speichertank (10) ist mit wenigstens einer Wärmetauscheranordnung (100, 200, 300) innerhalb des Gehäuses (12) vorkonfektioniert, wobei wenigstens eine zweite Wärmetauscheranordnung (200) für ein zweites Wärmeträgermedium (202) und/oder wenigstens eine dritte Wärmetauscheranordnung (300) für ein drittes Wärmeträgermedium (302) vorgesehen ist, und wobei die erste Wärmetauscheranordnung (100) von der zweiten und/oder dritten Wärmetauscheranordnung (200, 300) wenigstens bereichsweise umgeben ist.

## Beschreibung

### Stand der Technik

Die Erfindung betrifft einen Erdspeichertank für ein Energiespeichersystem nach dem Oberbegriff des Patentanspruchs 1.

Aus der EP 1 807 672 B1 ist ein Erdspeichertank für ein Energiespeichersystem bekannt, das mit hohem Wirkungsgrad zum Wärmen und Kühlen von Gebäuden und Einrichtungen eingesetzt werden kann, wobei besonders beim Einsatz einer Absorptionswärmepumpe zum Wärmeentzug im Winter und lediglich eines Gebläses zum Kühlen im Sommer ein wirtschaftlicher Betrieb möglich ist. Mit besonderem Vorteil kann das Energiespeichersystem dort eingesetzt werden, wo in kurzen Zeiträumen Spitzenlasten zum Kühlen gefordert sind, wie etwa in Messehallen.

Dies wird unter anderem durch einen speziellen Erdspeichertank mit Wärmetauscherebenen erreicht, die bei Bedarf zu- oder abschaltbar sind. Durch einen Gradienten der Wärmetauscherschlangen in den Wärmetauscherebenen sowohl in radialer als auch in axialer Richtung sowie einer günstigen Anordnung von Zu- und Rücklauf der Wärmetauscherschlangen innerhalb der einzelnen und zwischen benachbarten Wärmetauscherebenen kann ein über das Speichervolumen sehr homogenes Laden und Entladen des Erdspeichertanks erfolgen. In einer Ausgestaltung ist der Erdspeichertank ein Eisspeicher, dessen Temperatur mit geringer Varianz um den Gefrierpunkt schwankt.

Aus der DE 10 2007 026 149 A1 ist ein Speicher für Wärmeenergie bekannt, bei dem der Speicher transportabel ausgelegt ist. Der Speicher wird vorgefertigt in eine Erdgrube eingelassen.

Eine Aufgabe der Erfindung ist es, einen Erdspeichertank für ein Energiespeichersystem so weiterzuentwickeln, dass dieser für kleinere Einheiten wirtschaftlich ist.

Die Aufgabe wird durch die Merkmale des Patentanspruchs 1 gelöst.

Vorteilhafte Ausgestaltungen der Erfindung sind den weiteren Ansprüchen, der Zeichnung und der Beschreibung zu entnehmen.

Es wird ein Erdspeichertank vorgeschlagen mit einem einen Innenraum umgebenden Gehäuse, wobei der Erdspeichertank zum Einbau ins Erdreich vorgesehen ist, und wobei der Innenraum zur Aufnahme eines Speichermediums und wenigstens einer ersten Wärmetauscheranordnung in Kontakt mit dem Speichermedium, vorgesehen ist, wobei der Erdspeichertank zum Transport, insbesondere zum Straßentransport, ausgebildet ist. Der Speichertank ist bereits zum Transport mit wenigstens einer Wärmetauscheranordnung innerhalb des Gehäuses vorkonfektioniert, wobei wenigstens eine zweite Wärmetauscheranordnung für ein zweites Wärmeträgermedium und/oder wenigstens eine dritte Wärmetauscheranordnung für ein drittes Wärmeträgermedium vorgesehen ist, wobei die erste Wärmetauscheranordnung von der zweiten und/oder dritten Wärmetauscheranordnung wenigstens bereichsweise umgeben ist.

Die erste Wärmetauscheranordnung kann insbesondere zentral angeordnet sein und von der zweiten und dritten Wärmetauscheranordnung umgeben sein. Durch das Vorkonfektionieren mit den Wärmetauscheranordnungen kann der Erdspeichertank anschlussfertig angeliefert werden, was den Einbau für den Kunden weiter vereinfacht. Durch die Ausbildung des Erdspeichertanks zum schwerlastfreien Straßentransport, d.h. zum Transport ohne Schwerlasttransporter, kann der Speichertank auf der Ladefläche eines üblichen Lastkraftwagens transportiert werden. Der Vorteil ist, dass die Notwendigkeit entfällt, den Speichertank erst am Einbauort zu fertigen. Übliche Erdspeichertanks werden vor Ort gefertigt, und müssen z.B. aus Beton gegossen werden. Dies bedeutet einen hohen Aufwand für den Aufbau eines Energiespeichersystems mit einem solchen Erdspeichertank, da nicht nur der Aushub für den Erdspeichertank gemacht werden muss, sondern auch die Infrastruktur für das Gießen des Betongehäuses vor Ort gebracht und der Beton gegossen werden muss und dieser auch aushärten muss. Dies ist einerseits zeitaufwändig und kann andererseits nur bei Außentemperaturen durchgeführt werden, bei denen ein Aushärten des Betons möglich ist, da sonst Schäden am Gehäuse drohen. Ein Kunde kann den erfindungsgemäßen Erdspeichertank einfach beim Händler in Augenschein nehmen und eine geeignete Form und Größe auswählen und anliefern lassen, womit der Aufwand reduziert und die Wetterabhängigkeit des Einbaus des Erdspeichertanks deutlich verringert werden kann. Wird eine größere Speichermenge gewünscht, können zwei oder mehr Erdspeichertanks zusammengeschaltet werden, womit sich ein flexibles Speichervolumen ergibt, das sich bedarfsabhängig vergrößern oder verkleinern lässt. Ein günstiges Fassungsvermögen des Gehäuses des Erdspeichertanks liegt bei unter 10000 Litern, z.B. zwischen 3000 und 7000 Litern, was sich problemlos von Gewicht und Größe her mit einem gängigen Lastkraftwagen transportieren lässt. Das Gehäuse kann einteilig sein oder aus zwei oder mehr Schalen gefertigt sein, die vor Ort zusammengefügt werden.

Die skalierbare Größe und weitgehend variable Formgestaltung des Erdspeichertanks macht es günstigerweise möglich, den Erdspeichertank z. B. im Vorgarten eines Einfamilienhauses zu vergraben, ohne dass die darüber liegen Flächen als Nutzfläche verloren gehen oder dass die Optik der Umgebung dadurch beeinträchtigt würde. Auch können z. B. Garagen oberhalb des Erdspeichertanks errichtet werden, so dass durch den Erdspeichertank keine Fläche verloren geht. Der Erdspeichertank kann bei entsprechender Formgebung und Stabilität gleichzeitig auch als Fundament oder Untergrund für eine Garage oder ein anderes Bauwerk genutzt werden.

Bevorzugt ist der Erdspeichertank zur Aufnahme eines Speichermediums vorgesehen, das unter Freisetzung oder Aufnahme latenter Wärme seinen Aggregatzustand ändert, beispielsweise zwischen flüssig und fest. Günstigerweise ist als Speichermedium Wasser vorgesehen. Denkbar sind jedoch auch andere Materialien denkbar, z.B. Paraffin, je nach gewünschtem Temperaturniveau des Speichermediums. Der Erdspeichertank kann gegebenenfalls beim Transport mit dem Speichermedium befüllt sein.

Der Erdspeichertank kann bestimmungsgemäß mit seiner Umgebung wenigstens zeitweise bestimmungsgemäß in Wärmetausch stehen, so dass Umgebungswärme aus dem Erdreich genutzt werden kann oder die nähere Speicherumgebung als Erweiterung des Erdspeichertanks genutzt werden kann. Der Ausdruck ,,bestimmungsgemäß mit seiner Umgebung in Wärmetausch stehend" soll bedeuten, dass der Erdspeichertank für seine reguläre Funktion zumindest zeitweise in Wärmetausch mit seiner Umgebung steht, d.h. nicht oder zumindest zeitweise nicht gegen den Wärmetausch isoliert ist. Dies trifft auf einen erdunterstützten Speichertank zu, der im Erdreich vergraben ist und gezielt z.B. Wärme aus dem umgebenden Erdreich aufnimmt.

Vorteilhaft kann das Gehäuse in der Art einer Regenwasserzisterne ausgebildet sein, wobei das Gehäuse insbesondere ein Fassungsvermögen von höchstens 12 m³ aufweisen kann. Günstig für den Straßentransport ist, wenn das Gehäuse einen Außendurchmesser von höchstens 2,5 m aufweisen kann. Mit dieser Ausgestaltung wird eine sinnvolle Größe eines Speichertanks zur Verfügung gestellt, der für eine ökonomische Energieversorgung durch ein entsprechendes, wenigstens einen erfindungsgemäßen Erdspeichertank umfassendes Energieversorgungssystem insbesondere eines Einfamilienhauses geeignet ist.

Alternativ kann der Erdspeichertank ein Gehäuse aufweisen, das in der Art einer Fertiggaragenhülle ausgebildet sein kann, wobei das Gehäuse insbesondere ein Fassungsvermögen von höchstens 38 m³ aufweisen kann. Günstig für den Straßentransport ist, wenn das Gehäuse eine Länge von etwa 6,5 m, eine Breite von etwa 2,5 m und eine Höhe von etwa 2,2 m aufweisen kann. Mit dieser Ausgestaltung wird eine sinnvolle Größe eines Speichertanks zur Verfügung gestellt, der für eine ökonomische Energieversorgung durch ein entsprechendes, wenigstens einen erfindungsgemäßen Erdspeichertank umfassendes Energieversorgungssystem insbesondere eines Einfamilienhauses geeignet ist.

Je nach Energiebedarf und Größe des zu versorgenden Objekts wird der Fachmann eine geeignete Größe des Erdspeichertanks auswählen.

Gemäß einer günstigen Weiterbildung kann das Gehäuse wenigstens eine Öffnung zur Durchführung eines Vorlaufs und eines Rücklaufs für wenigstens ein Wärmeträgermedium wenigstens einer Wärmetauscheranordnung aufweisen. So können ohne großen Aufwand wenigstens eine Wärmetauscheranordnung im Gehäuse angeordnet sein oder am Einbauort eingebaut werden und an ein Energiespeichersystem, insbesondere an Fördermittel für Wärmeträgermedium, Wärmequellen und Verbraucher, angeschlossen werden.

Vorteilhaft kann der Erdspeichertank in der Art einer Regenwasserzisterne ausgebildet sein, die zum Beispiel in einem Betonwerk gegossen oder mit einer Kunststoffschale gefertigt wird, oder auch in der Art und Form einer Fertiggarage aus Beton. Der Erdspeichertank kann einem Anwender einbaufertig geliefert werden und muss dort lediglich mit den entsprechenden Anschlüssen für die verschiedenen Wärmeträgermedien verbunden werden. Besonders vorteilhaft ist eine Verwendung einer Regenwasserzisterne und/oder einer Fertiggaragenhülle für einen Erdspeichertank. Die Bauteile müssen lediglich mit entsprechenden Anschlussmöglichkeiten und Abdichtungen für Zulauf und Rücklauf sowie mit Haltemitteln für ein oder mehrere Wärmetauschereinrichtungen versehen werden, was sich technisch leicht umsetzen lässt.

In einer weiteren Ausgestaltung kann die erste Wärmetauscheranordnung axial übereinander angeordnete Ebenen von konzentrisch gewundenen Wärmeübertragern umfassen. Die Wärmeübertrager können z.B. Rohre oder Schläuche sein. Damit lässt sich im Betrieb eine günstige und homogene Betriebsweise des Erdspeichertanks erreichen.

Vorzugsweise ist die erste Wärmetauscheranordnung dafür vorgesehen, dem Speichertank in einer Entzugsperiode Wärme zu entziehen. Die entzogene Wärme kann z. B. zum Heizen und/oder zur Warmwasserbereitung verwendet werden. Dazu kann das Temperaturniveau des die entzogene Wärme transportierenden ersten Wärmeträgermediums mit einer an die erste Wärmetauscheranordnung angeschlossenen Wärmepumpe entsprechend angehoben werden. Das erste Wärmeträgermedium kann vorzugsweise flüssig, z.B. Sole oder ein Wasser-Glykol-Gemisch sein.

Zweckmäßigerweise ist die erste Wärmetauscheranordnung so in dem Gehäuse angeordnet, dass ein kontrolliertes Erstarren und Auftauen des Speichermediums erfolgen kann, das eine Spreng- oder Druckwirkung auf das Gehäuse des Speichertanks vermindert. Sinnvollerweise kann das Gehäuse alternativ oder zusätzlich einen Pufferbereich aufweisen, der einen Volumenzuwachs des Speichermediums aufnehmen kann.

Mit der zweiten und/oder dritten Wärmetauscheranordnung kann beispielsweise das Speichermedium regeneriert werden, wenn dieses thermisch entladen ist und ansonsten Wärmeenergie dem Speichermedium zugeführt und im Erdspeichertank gespeichert werden, während die erste Wärmetauscheranordnung ganz oder zumindest überwiegend zum Wärmeentzug vorgesehen ist. Die zweite und/oder dritte Wärmetauscheranordnung kann verhindern, dass erstarrendes Speichermedium an das Gehäuse gelangt oder dieses zumindest verzögern. Gegebenenfalls kann die zweite und/oder dritte Wärmetauscheranordnung aus mehreren separaten Wärmetauscheranordnungen bestehen, die z.B. an unterschiedlichen Positionen im Speichertank angeordnet sein können.

Vorteilhaft kann die zweite Wärmetauscheranordnung gemäß einer weiteren Ausgestaltung eine Auffangvorrichtung für Kondensat aufweisen. Dies ist besonders zweckmäßig, wenn als zweites Wärmeträgermedium ein Gas, z.B. Luft, eingesetzt wird. Feuchte Luft bringt einen zusätzlichen Energieeintrag über die Kondenswärme des Wassergehalts in der Luft.

In einer weiteren Ausgestaltung kann in einem Vorlauf der zweiten Wärmetauscheranordnung eine Kopplungseinrichtung für eine Fördereinrichtung vorgesehen sein. Mit der Fördereinrichtung kann ein Gas, z.B. Luft in die Wärmetauscheranordnung eingepresst werden und die Abwärme der Fördereinrichtung mit eingebracht werden.

Vorteilhaft kann die zweite und/oder dritte Wärmetauscheranordnung wenigstens bereichsweise an einer Innenseite des Gehäuses angeordnet sein. Ein Vorteil der Anordnung an der Innenseite des Gehäuses besteht darin, dass das erstarrende Speichermedium nicht an die Gehäusewand gelangt. Vorzugsweise kann die zweite und/oder dritte Wärmetauschereinrichtung wenigstens bereichsweise die erste Wärmetauscheranordnung umgeben, wodurch das Speichermedium nahe der Gehäusewand länger flüssig bleiben kann.

Denkbar ist weiterhin, die zweite und/oder dritte Wärmetauscheranordnung wenigstens bereichsweise innerhalb der Gehäusewand anzuordnen. Die Wärmetauscheranordnung kann in diesem Fall bei der Herstellung des Gehäuses einfach mit eingegossen werden. Zweckmäßigerweise kann die zweite Wärmetauscheranordnung die erste Wärmetauscheranordnung wenigstens bereichsweise umgeben.

In einer günstigen Ausgestaltung können Wärmeübertrager der zweiten und/oder dritten Wärmetauscheranordnung sich wenigstens bereichsweise in Umfangsrichtung des Gehäuses erstrecken. Die Wärmeübertrager können Schläuche oder Rohre sein, welche dazu vorgesehen sind, das jeweilige Wärmeträgermedium führen, und können wenigstens eine Strecke entlang der Innenwand geführt sein, oder diese auch in einer Schleife ganz oder auch mehrfach umrunden. Die Ausgestaltung der Wärmeübertrager und deren Verlegung im Gehäuse kann bedarfsgerecht von einem Fachmann ausgewählt werden und an das konkrete Energiespeichersystem und die verfügbaren Wärmequellen und Verbraucher und die am Einsatzort herrschenden Randbedingungen angepasst werden.

In einer zweckmäßigen Ausgestaltung kann das Gehäuse wenigstens eine Einrichtung zum Befestigen einer Transportsicherung aufweisen, was den Transport des Erdspeichertanks sowie das Auf- und Abladen erleichtert.

Im Speichertank des Energiespeichersystems können unterschiedliche intervallartig anfallende Energieformen verfügbar gemacht und effektiv z.B. zum Heizen genutzt werden, was insbesondere in Verbindung mit Wärmepumpen für Heizungsanlagen vorteilhaft ist. Die Funktion als Energiespeichersystem beinhaltet, dass alle eingespeisten günstigen Wärmemengen entweder sofort oder auch erst später, je nach Bedarf, entnommen werden können.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen in schematischer Darstellung:
- Figur 1: schematisch einen Speichertank nach einer Ausgestaltung der Erfindung beim Transport;
- Figur 2: eine Ausgestaltung eines Speichertanks in aufgeschnittener Darstellung mit einer günstigen Anordnung mit einer zentralen ersten Wärmetauscheranordnung und zwei äußeren, die erste Wärmetauscheranordnung umgebende Wärmetauscheranordnungen;
- Figur 3: in einer Seitenansicht ein Ausführungsbeispiel eines im Erdreich vergrabenen, erdreichgestützten Speichertanks;
- Figur 4a, 4b: in einer Seitenansicht weitere Ausführungsbeispiele von erdreichgestützten Speichertanks in Quaderform zusammengesetzt aus einer oberen und unteren Schale (Fig. 4a) und in Kugelform (Fig. 4b)
- Figur 5: eine Anordnung von mehreren zusammengeschalteten Speichertanks; und
- Figur 6: einen Prinzipschaltplan einer Ausgestaltung eines erfindungsgemäßen Energiespeichersystems mit einem Speichertank und drei Wärmetauscheranordnungen;

### Beschreibung der Ausführungsbeispiele

Im Wesentlichen gleich bleibende Teile sind in den Figuren grundsätzlich mit den gleichen Bezugszeichen beziffert.

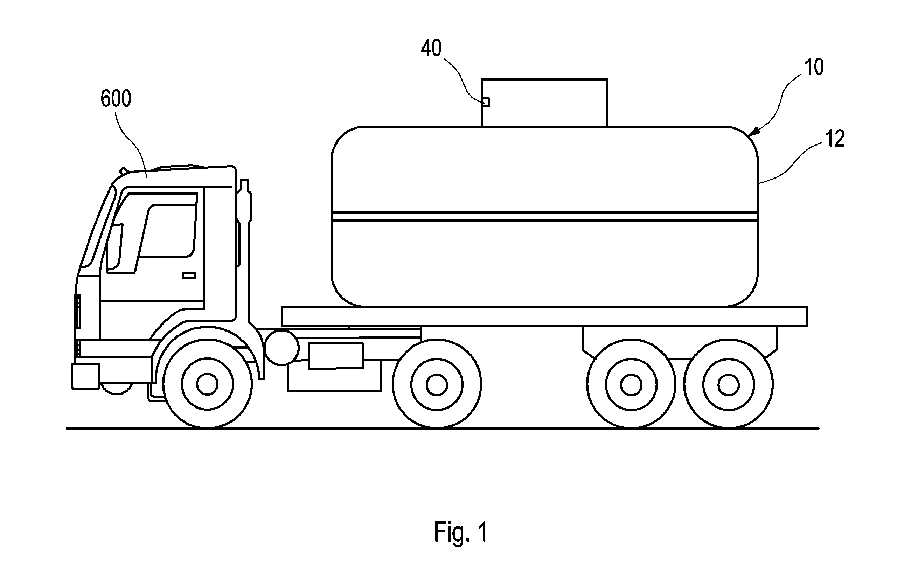

Figur 1 zeigt schematisch einen Erdspeichertank 10 nach einer Ausgestaltung der Erfindung beim Transport mit einem Straßenfahrzeug. Vorteilhaft kann der Erdspeichertank 10 mit einem normalen Lastkraftwagen 600 über die Straßen befördert werden, d.h. nicht als Schwerlasttransport, so dass eine Anlieferung des Erdspeichertanks 10 zu Wohngebäuden ohne großen Aufwand möglich ist.

Dazu kann günstigerweise vorgesehen sein, dass der Erdspeichertank 10 ein Fassungsvermögen von günstigerweise höchstens 12000 Litern, vorzugsweise höchstens 10000 Litern, z. B. zwischen etwa 4000 und etwa 7000 Litern.

Beispielhafte Abmessungen können z.B. ein Außendurchmesser von etwa 2,5 m, eine Gesamthöhe von z.B. 3,5 m mit einem Volumen von etwa 10 m³ bis 12 m³ und einem Leergewicht inklusive Wärmetauschereinrichtungen von etwa 6 Tonnen sein. Die Wandstärke kann beispielsweise 12 cm betragen. Der Erdspeichertank 10 kann aus Beton gebildet sein und, im Einbauzustand, z. B. als stehender oder liegender Zylinder ausgeführt sein.

In einer kleineren Variante können beispielhafte Abmessungen sein: Außendurchmesser von etwa 2 m, Länge z.B. 2,5 m, Volumen von etwa 6,5 m³ und Leergewicht, inklusive Wärmetauschereinrichtungen von etwa 400 kg, unter 6 Tonnen. Die Wandstärke kann z.B. 8 mm sein. Der Erdspeichertank 10 kann aus Kunststoff als (im Einbauzustand) stehender Zylinder ausgeführt sein.

In einer weiteren Variante in Form eines rechteckigen Gehäuses aus Beton, insbesondere in der Art einer Fertiggaragenhülle, können günstige Abmessungen sein Länge ca. 6,5 m, Breite ca. 2,5 m, Höhe ca. 2,2 m, Leergewicht inklusive Wärmetauschereinrichtungen etwa 12 Tonnen, Volumen bis zu 38 m³.

Eine Fertiggaragenhülle für eine Einzelgarage oder für eine Doppelgarage lässt sich mit einfachen Mitteln als Gehäuse 12 des Erdspeichertanks 10 anpassen.

Die genannten Parameter und Materialien sind lediglich als illustrative Beispiele gedacht. Andere Abmessungen und Ausführungen sind selbstverständlich möglich.

Der Erdspeichertank 10 weist vorteilhaft in seinem Gehäuse 12 eine oder mehrere Öffnungen 40 für einen Vorlauf und Rücklauf wenigstens einer Wärmetauscheranordnung auf, die zum Einbau in das Innere des Gehäuses 12 vorgesehen ist. Der Erdspeichertank 10 kann mit wenigstens einer Wärmetauscheranordnung innerhalb des Gehäuses 12 vorkonfektioniert sein oder leer angeliefert werden. Mit Vorteil ist der Erdspeichertank 10 mit wenigstens einer Wärmetauscheranordnung innerhalb des Gehäuses 12 anschlussfertig vorkonfektioniert, so dass der Einbau vor Ort besonders unaufwändig ist.

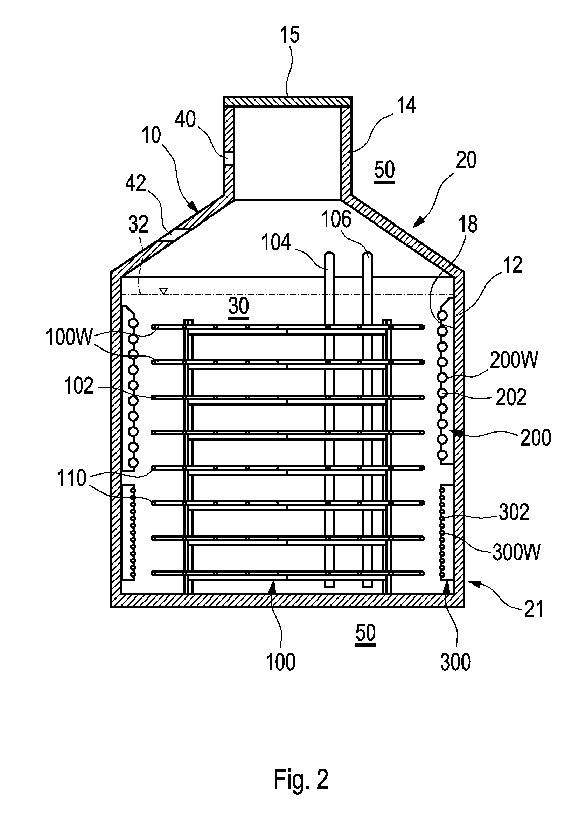

Figur 2 zeigt eine beispielhafte Ausgestaltung eines Erdspeichertanks 10 in aufgeschnittener Darstellung mit einer günstigen Anordnung mit einer zentralen ersten Wärmetauscheranordnung 100 und zwei äußeren, die erste Wärmetauscheranordnung 100 umgebende Wärmetauscheranordnungen 200, 300. Die Füllstandslinie 32 deutet eine Füllstandshöhe eines Speichermediums 30, z.B. Wasser im Innern des Gehäuses 12 des Erdspeichertanks 10 an.

Die erste Wärmetauscheranordnung 100 umfasst Wärmeübertrager 100W, vorzugsweise in Form von Rohr- oder Schlauchwicklungen. Die Wärmeübertrager 100W können im Wesentlichen einlagig oder auch mehrlagig ausgebildet und in axial voneinander beabstandeten Ebenen 110 übereinander gestapelt. Das Material der Wärmeübertrager 100W kann beliebig sein, etwa Metall oder Kunststoff; als preiswertes und dauerhaftes Material wird bevorzugt Polyethylen (PE) eingesetzt. Die axial beabstandeten Ebenen 110 können vorteilhaft über als Verteiler oder Sammler wirkende Versorgungsrohre 104, 106 (Zulauf und Ablauf) strömungstechnisch parallel vom Wärmeträgermedium 102 durchströmbar sein. Dabei können alle Ebenen 110 gleichzeitig durchströmt werden. Optional können auch nur einige ausgewählte der Ebenen 110 durchströmt werden und bedarfsweise weitere Ebenen 110 zugeschaltet werden, um etwa eine erhöhte Kühlleistung abzudecken, falls der Erdspeichertank 10 (auch) zur Kühlung eingesetzt wird.

Die Wärmeübertrager 100W können vorzugsweise U-förmig als Doppelspirale pro Ebene 110 auf einem speichenradähnlichen Montagegestell aufgewickelt sein, wobei die Basis der Doppelspirale zentral angeordnet ist und die beiden Enden der Doppelspirale sich am äußeren Umfang der Ebene 110 bzw. dem speichenradähnlichen Montagegestell befinden und z.B. zu einem Ventil oder Leitungsanschluss außerhalb des Speichertanks 10 geführt sind.

Die Gefahr einer Sprengwirkung auf das Gehäuse 12 beim Einfrieren des Speichermediums 30 kann reduziert werden, wenn die Wärmeübertrager 100W in jeder Ebene 110 so gewickelt sind, dass in einem inneren, zentralen Bereich ein geringerer Abstand eingestellt ist zwischen den im Wesentlichen konzentrischen Wicklungen als in einem umfangsnahen Bereich der Ebenen 110. Benachbarte Spiralarme werden jeweils in entgegengesetzten Fließ- bzw. Drehrichtungen mit dem ersten Wärmeträgermedium durchströmt, was die Temperatur im Speichermedium 30 homogenisiert. Vorteilhafterweise können die Ebenen 110 analog von unten nach oben in größer werdenden Abständen angeordnet sein. Zusätzlich kann über der obersten Ebene 110 ein ausreichender Luftraum oder ein nicht zur Erstarrung vorgesehener Höhenbereich von Speichermedium 30 vorgesehen sein, damit sich das Speichermedium 30 beim Erstarren problemlos ausdehnen kann. Ferner ist ein Überlauf 42 im oberen Bereich 20 des Gehäuses 12 oberhalb der Füllstandslinie 32 vorgesehen.

Das Gehäuse 12 kann mit einer oder mehreren Montagefugen geteilt und zerlegbar sein, um einzelne oder auch gleich mehrere Wärmeübertrager 100W in das Gehäuse 12 als vorgefertigte Einheiten einbauen zu können. Alternativ kann zum Einbau der vorgefertigten Wärmeübertrager 100W auch ein abnehmbarer Deckel 15 mit großer Fläche auf dem Gehäuse 12 vorgesehen sein, der ein Absenken der Wärmeübertrager 100W in das Gehäuse gestattet.

Die zweite Wärmetauscheranordnung 200 umgibt in diesem Ausführungsbeispiel die erste Wärmetauscheranordnung 100 in ihrem axial oberen Bereich koaxial und ist z. B. an oder nahe einer Innenseite 18 des Gehäuses 12 des Speichertanks 10 angeordnet. Die zweite Wärmetauscheranordnung 200 besteht aus axial beabstandeten Rohren oder Schläuchen, insbesondere Wellschläuchen, die als Wärmeübertrager 200W dienen und der Kontur der Innenseite 18 des Gehäuses 12 folgen. Günstig ist, ein Gefälle der Wärmeübertrager 200W zwischen Vorlauf 204 und Rücklauf 206 zweiten Wärmetauscheranordnung 200 vorzusehen, damit im Wärmeträgermedium 202 auskondensierende Flüssigkeit gesammelt und abgeführt werden kann.

Im gezeigten Ausführungsbeispiel axial unterhalb der zweiten Wärmetauscheranordnung 200 ist in einem unteren Bereich 21 des Speichertanks 10 eine dritte Wärmetauscheranordnung 300 angeordnet, welche ebenfalls die erste Wärmetauscheranordnung 100 konzentrisch mit als Wärmeübertrager 300W dienenden gewundenen und axial beabstandeten Schläuchen oder Rohren umgibt.

Die zweite Wärmetauscheranordnung 200 kann beispielsweise ein gasförmiges Wärmeträgermedium 202 beinhalten. Die Durchmesser der Wärmeübertrager 200W weisen typischerweise nicht den gleichen Rohrdurchmesser oder die gleichen Abmessungen der jeweiligen Wärmeübertrager 200W auf wie die mit flüssigem Wärmeträgermedien 102, 302 betriebenen Wärmetauscheranordnungen 100, 300, sondern sind größer als diese. Typischerweise können die Wärmeübertrager 200W z. B. einen deutlich größeren Durchmesser als die Flüssigkeit führenden Wärmeübertrager 100W, 300W aufweisen.

Bei Gehäusen 12 mit kreisrundem Grundriss, etwa in der Art einer üblichen Regenwasserzisterne, sind die Wärmeübertrager 300W vorzugsweise in Form einer oder mehrerer Rohrwindungen (günstigerweise mit Gefälle) ausgeführt, die nahe der Innenseite 18 des Gehäuses entlang als Schraubenkurve verlaufen, wie in der Figur angedeutet ist. Bei Gehäusen 12 mit eckigem Querschnitt, etwa in der Art einer Fertiggaragenhülle, ist die Anordnung der Wärmeübertrager 300W im Abstand zu einer Innenwand vorzugsweise so, dass die einzelnen Abschnitte der Wärmeübertrager 300W ein Gefälle in die gleiche Richtung aufweisen. Ein gleichmäßiges Gefälle stellt sicher, dass eine möglichst einfache Entlüftung des Wärmeübertragers 300W beim Befüllen mit dem dritten Wärmeträgermedium 302 gewährleistet ist.

Die zweite und dritte Wärmetauscheranordnung 200 und 300 ist jeweils vorzugsweise in den spät oder gar nicht vereisenden bzw. erstarrenden Zonen des Speichermediums 30 im Speichertank 10 untergebracht, jedoch so, dass möglichst wenig zusätzlicher Platz dafür verbraucht wird. Damit ergibt sich ein sehr kompakter Speichertank 10.

Jeder Wärmeübertrager 200W, 300W zweiten und/oder dritten Wärmetauscheranordnung 200 und 300 kann z.B. eine oder mehrere Windung, bezogen auf den inneren Umfang des Gehäuses 12 aufweisen. Einzelne oder alle Wärmeübertrager 200W können aber auch mehr als eine Windung aufweisen (z.B. 2 Windungen oder 2,5 Windungen) oder einen Bruchteil von einer Windung (z.B. 0,5 Windungen).

Grundsätzlich ist es denkbar (zeichnerisch nicht dargestellt), dass ein rundes oder zylindrisches Gehäuse 12 auch in einer Einbaulage mit liegender statt vertikaler Achse als Speichertank 10 verwendet wird, wobei die einzelnen Wärmetauscheranordnungen 100, 200 und 300 dann entsprechend im Raum gedreht positioniert sind. Dies ist dann sinnvoll, wenn das Gehäuse 12 aus Kunststoff und aus zwei halbzylinderähnlichen, größeren Grundformen besteht, die im montierten Zustand eine horizontale Teilungsfuge bilden, weil dann die leere obere Halbschale des Gehäuses 12 von oben auf die untere Halbschale, die mit Wärmetauscheranordnungen 100, 200 und 300 schon vormontiert sein kann, mit einem Hebemittel herabgelassen und mit ihr zu einer Einheit zusammengefügt werden kann.

Die in den Erdspeichertank 10 eingebauten wärmeübertragenden Bauelemente der Wärmetauscheranordnungen 100, 200, 300 sind unterhalb der Füllstandslinie 32 des Speichermediums 30 bzw. innerhalb des Speichermediums 30 angeordnet.

Durch die günstige Anordnung der Wärmetauscheranordnungen 100, 200, 300 wird weitgehend sichergestellt, dass das bei thermischer Entladung des Erdspeichertanks 10 anwachsende Volumen des erstarrten Speichermediums 30 sich in seiner Gesamtheit möglichst innerhalb bestimmter maximaler räumlicher Grenzen befindet. Bevorzugt befinden sich die zweite und die dritte Wärmetauscheranordnung 200 und 300 in einem Raumbereich, der im gewöhnlichen Betriebsfall von flüssigem Speichermedium 30 angefüllt ist. Die Gesamtmasse des erstarrten Speichermediums 30 wird somit im normalen Betriebsfall soweit wie möglich von einem vor Ausdehnungsdruck schützenden Flüssigkeitsbereich 109 umgeben, zumindest im Außenwandbereich des Gehäuses 12 und unterhalb der Füllstandslinie 32.

Anschlussleitungen zu den Wärmetauscheranordnungen 100, 200, 300 können an sich an beliebiger Stelle durch eine oder mehrere Öffnungen 40 in den Erdspeichertank 10 geführt sein. Diese werden zweckmäßigerweise so angeordnet, dass sich ein möglichst geringer Wärme- bzw. Energieverlust ergibt und keine thermischen Kurzschlüsse zwischen benachbarten Systemkomponenten auftreten, was sich z.B. durch entsprechende Abstände oder Isolierungen erreichen lässt.

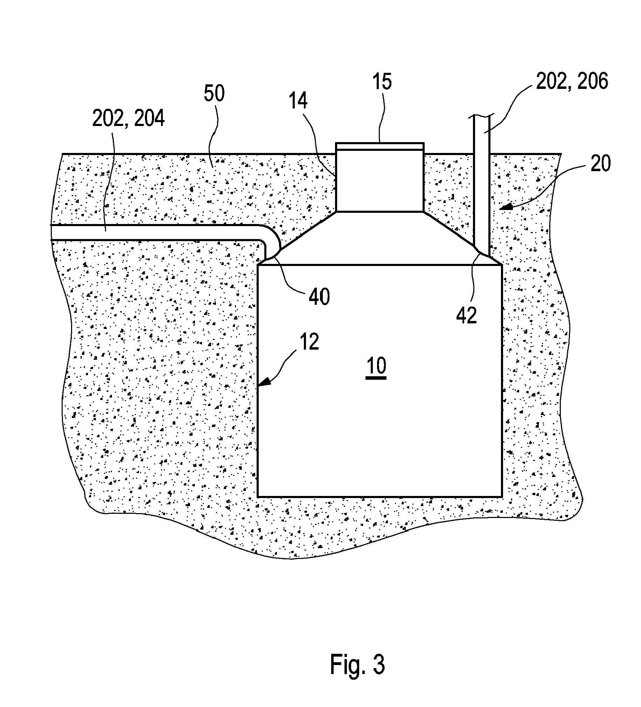

Figur 3 zeigt in einer Seitenansicht eine beispielhafte Ausgestaltung eines Erdspeichertanks 10 in einer Einbausituation im Erdreich 50. Die Einbautiefe des Erdspeichertanks 10 ist gering und in Erdbodennähe angeordnet. Im oberen Bereich 20 seines Gehäuses 12 ist ein zylinderförmiger Stutzen 14 mit geringerem Durchmesser angeformt, der z.B. zu Wartungs- und Inspektionszwecken geöffnet werden kann.

Das Gehäuse 12 kann als Hohlkörper beliebigen Querschnitts, etwa eines Hohlzylinders oder eines Quaders, ausgebildet sein. Damit wird eine besonders einfache und zuverlässige Montage der Wärmetauscheranordnungen 100, 200, 300 ermöglicht. Denkbar sind jedoch durchaus auch andere Formen, die der Fachmann nach Bedarf auswählen wird. Ein günstiges Material für das Gehäuse ist z. B. Stein, Beton oder auch Kunststoff. Da der Speichertank 10 keine große Mindesteinbautiefe benötigt, kann das Gehäuse 12 zweckmäßigerweise so ausgestaltet sein, dass es befahrbar oder begehbar ist. Die Größe des Gehäuses 12 kann an den jeweiligen Bedarf angepasst sein. Dazu kann bei größeren Durchmessern des Gehäuses 12 aus statischen Gründen auch eine Stützstrebe angeordnet sein, um z. B. ein Fahrzeuggewicht tragen zu können.

Der Speichertank 10 kann in der Art einer Regenwasserzisterne ausgebildet sein, die z.B. in einem Betonwerk gegossen oder in einer Formpresse aus Kunststoff hergestellt wird. Querschnitt und Form des Erdspeichertanks 10 können beliebig gewählt werden, wie gerade benötigt, etwa als Zylinder, Quader, Kugel oder dergleichen.

Der Erdspeichertank 10 kann einbaufertig samt Wärmetauscheranordnungen 100, 200, 300 zum Einbauort geliefert werden und muss dort lediglich mit den entsprechenden Versorgungsleitungen für die verschiedenen Wärmeträgermedien, Fördereinrichtungen, Wärmequellen, Verbrauchern etc. verbunden werden. Beispielhaft ist eine Anschlussart dargestellt, bei der der Vorlauf 204 der zweiten Wärmetauschereinrichtung 200 durch eine Öffnung 40 eine Strecke im Erdreich 50 geführt ist, während der Rücklauf 206 durch eine andere Öffnung 42 nach oben geführt ist. Selbstverständlich können auch andere Anordnungen von Vorlauf 204 und Rücklauf 206 vorgesehen sein, etwa eine zentrale Zuführung von oben durch den Stutzen 14.

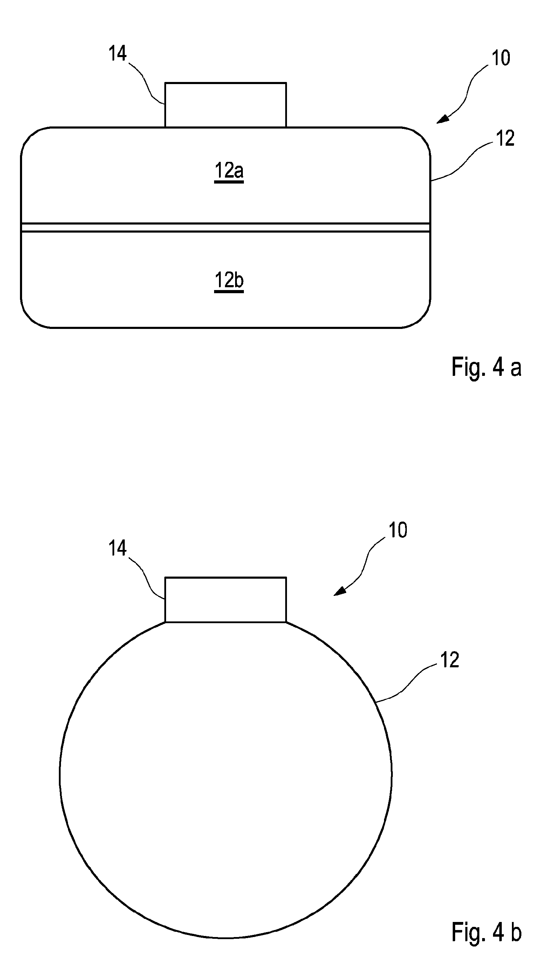

Die Figuren 4a und 4b zeigen beispielhaft und vereinfacht dargestellt andere Gehäuseformen eines Erdspeichertanks 10. Figur 4a zeigt ein quaderförmiges Gehäuse 12 mit geringerer Höhe als Breite, während Figur 4b ein im Wesentlichen kugelförmiges Gehäuse 12 zeigt. Das Gehäuse 12 kann, wie in Figur 4a angedeutet ist, aus zwei oder mehr Teilschalen 12a, 12b zusammengesetzt sein, etwa einer oberen Teilschale 12a und einer unteren Teilschale 12b, die als geschlossenes Gehäuse 12 geliefert werden können. Es ist jedoch auch möglich, das Gehäuse 12 zerlegt in Teilschalen 12a, 12b anzuliefern, vor Ort die Wärmetauschereinrichtungen zu montieren und die Teilschalen 12a, 12b erst dann dichtend zusammenzufügen.

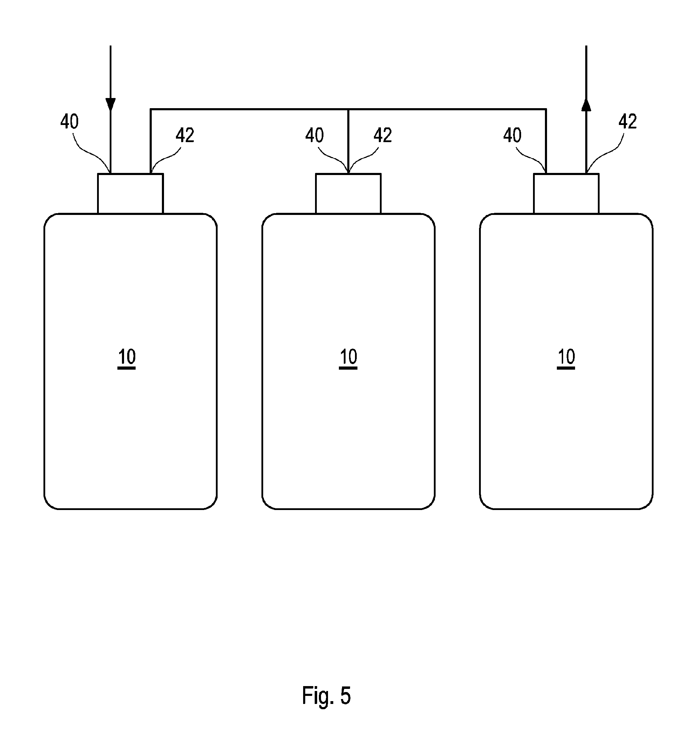

Figur 5 illustriert eine Serienschaltung von Vor- und Zulauf von wenigstens einer Wärmetauscheranordnung dreier Erdspeichertanks 10 als Beispiel einer Vergrößerung des verfügbaren Speicherinhalts. Selbstverständlich können mehr oder weniger Erdspeichertanks 10 vorgesehen sein, und die einzelnen Erdspeichertanks 10 können auch parallel geschaltet sein. Denkbar ist auch eine Mischung von Parallelschaltung und Serienschaltung

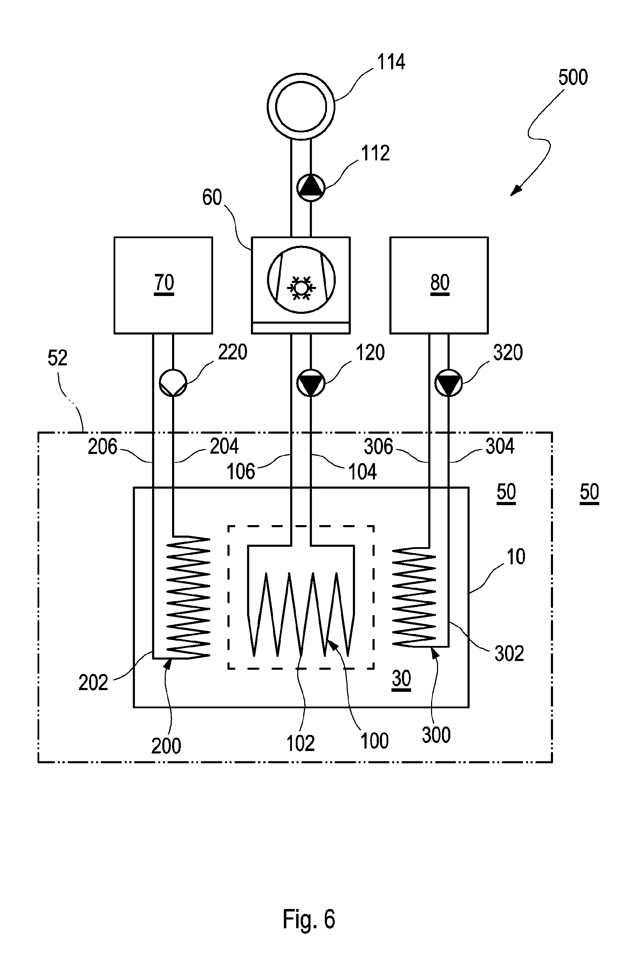

Figur 6 zeigt schematisch einen Prinzipschaltplan einer vorteilhaften Ausgestaltung eines Energiespeichersystems 500 mit einem im Erdreich 50 eingesetzten Erdspeichertank 10 mit einer ersten, zweiten und dritten Wärmetauscheranordnung 100, 200, 300, die im Gehäuse des Erdspeichertanks 10 angeordnet sind.

Ein Einsatz des transportablen Erdspeichers 10 in einem solchen Energiespeichersystem 500 ist besonders vorteilhaft, da hier ein relativ kleines Speichervolumen ausreichend ist, beispielsweise mit Wasser als Speichermedium 30, um z.B. ein Einfamilienhaus ökonomisch mit Wärmeenergie zu versorgen. Die Größe des Erdspeichertanks 10 ist besonders dafür ausgelegt, um den Energiebedarf eines solchen Objekts zu decken.
Durch die erste Wärmetauscheranordnung 100 wird Wärme entzogen, zweckmäßigerweise mit einem flüssigen Wärmeträgermedium 102, während durch die zweite Wärmetauscheranordnung 200 dem Erdspeichertank 10 praktisch permanent Energie zugeführt werden kann, vorzugsweise durch ein gasförmiges Wärmeträgermedium 202. Auch die dritte Wärmetauscheranordnung 300 kann zur Wärmezufuhr genutzt werden, beispielsweise mit einer Flüssigkeit als drittes Wärmeträgermedium 302.

Der Erdspeichertank 10 steht zumindest zeitweise mit seiner Umgebung, dem Erdreich 50 gezielt im Wärmetausch, d.h. zumindest ist zeitweise ein Wärmefluss vom Erdreich 50 in den Erdspeichertank 10 (oder aus diesem in das Erdreich 50) für die Funktion des Erdspeichertanks 10 erwünscht. Das Bezugszeichen 52 soll eine Systemgrenze im den Erdspeichertank 10 umgebenden Erdreich 50 andeuten und betrifft einen Bereich im Erdreich 50, der noch wesentlich Wärme in den Erdspeichertank 10 eintragen kann, d.h. einen typischen Wirkungsbereich zwischen der Umgebung des Erdspeichertanks 10 und dem Erdspeichertank 10 selbst, der typischerweise abhängig ist von Auslegungs-Parametern wie z.B. der Größe des Erdspeichertanks 10. Das Erdreich 50 kann einerseits als Geothermie-Quelle dienen und andererseits in den üblichen Entzugsperioden, beispielsweise Heizperioden, Erdwärme an den praktisch unisolierten Erdspeichertank 10 liefern. Darüber hinaus kann das umliegende Erdreich 50 aufgrund seiner Masse und Wärmespeicherfähigkeit zeitweise sogar als Erweiterung des Speichertanks 10 dienen.

Innerhalb des Erdspeichertanks 10 deutet die unterbrochene Linie einen typischen Wirkungsbereich der ersten Wärmetauscheranordnung 100 an, mit der Energie aus dem Erdspeichertank 10 entzogen wird, z. B. zum Betrieb einer oder mehrerer Wärmepumpe 60, welche die entnommene Wärme aus dem Erdspeichertank 10 auf ein höheres Temperaturniveau hebt. Das Wärmeträgermedium 102, etwa Sole oder ein Glykol-Wasser-Gemisch, wird mit einer Pumpe 120 umgewälzt.

Die Wärmepumpe 60 setzt das relativ niedrige Temperaturniveau des Speichermediums 30 des Erdspeichertanks 10 auf ein höheres Temperaturniveau um und versorgt, z.B. über eine Pumpe 112, einen oder mehrere Wärmeverbraucher 114, etwa ein zu beheizendes Gebäude.

Eine Fördereinrichtung 220, etwa ein Ventilator, ein Gebläse, eine Umwälzpumpe oder dergleichen, ist beim Energieeintragenzweckmäßigerweise im Vorlauf 204 der zweiten Wärmetauscheranordnung 200 angeordnet, so dass die Abwärme der Fördereinrichtung 220 mit genutzt werden kann.

An den Vorlauf 204 der zweiten Wärmetauscheranordnung 200 ist eine Wärmequelle 70 z.B. in Form einer Wärme liefernden Versorgungseinrichtung 70 für ein gasförmiges Medium, z.B. Umgebungsluft, Abgas, Abluft oder dergleichen, zum Wärmeeintrag in den Speichertank 10 angeschlossen.

Es ist möglich, dass der Vorlauf 204 und/oder der Rücklauf 206 bereichsweise auf dem Weg zum Erdspeichertank 10 hin bzw. vom Speichertank 10 weg über mehrere Meter im Erdreich 50 verlegt sind, um zusätzlich Erdwärme aufzunehmen. Diese Bereiche von Vorlauf 204 und/oder Rücklauf 206 können auch umschaltbar sein oder durch entsprechende Luftklappen ein- und abgeschaltet werden bzw. durch andere Leitungen umgangen werden.

Die dritte Wärmetauscheranordnung 300 dient wie die zweite Wärmetauscheranordnung 200 zur Regeneration des Speichermediums und zur Wärmezufuhr und weist ein flüssiges Wärmeträgermedium 302, z.B. Sole oder ein Glykol-Wasser-Gemisch auf, welches mittels einer Fördereinrichtung 320, z.B. einer Pumpe 320 umgewälzt wird. Hier wird beispielsweise Wärmeenergie von einer oder mehreren Wärmequellen 80 eingetragen. Die dritte Wärmetauscheranordnung 300 ist über einen Vorlauf 304 und einen Rücklauf 306 mit der Wärmequelle 80 verbunden, wobei die Pumpe 320 günstigerweise im Vorlauf 304 angeordnet ist. Gegebenenfalls kann die Strömungsrichtung in bestimmten Betriebsphasen umgekehrt werden, so dass Vorlauf 304 als Rücklauf und Rücklauf 306 als Vorlauf dient.

## Patentansprüche

1. Erdspeichertank (10) mit einem einen Innenraum umgebenden Gehäuse (12), wobei der Speichertank (10) zum Einbau ins Erdreich (50) vorgesehen ist, und wobei der Innenraum zur Aufnahme eines Speichermediums (30) und wenigstens einer ersten Wärmetauscheranordnung (100) in Kontakt mit dem Speichermedium (30), vorgesehen ist, wobei der Erdspeichertank (10) zum Transport, insbesondere zum Straßentransport, ausgebildet ist, **dadurch gekennzeichnet, dass** der Speichertank (10) mit wenigstens einer Wärmetauscheranordnung (100, 200, 300) innerhalb des Gehäuses (12) vorkonfektioniert ist, wobei wenigstens eine zweite Wärmetauscheranordnung (200) für ein zweites Wärmeträgermedium (202) und/oder wenigstens eine dritte Wärmetauscheranordnung (300) für ein drittes Wärmeträgermedium (302) vorgesehen ist, und wobei die erste Wärmetauscheranordnung (100) von der zweiten und/oder dritten Wärmetauscheranordnung (200, 300) wenigstens bereichsweise umgeben ist.

2. Erdspeichertank nach Anspruch 1, **dadurch gekennzeichnet, dass** das Gehäuse (12) in der Art einer Regenwasserzisterne ausgebildet ist.

3. Erdspeichertank nach Anspruch 1 oder 2, **dadurch gekennzeichnet, dass** das Gehäuse (12) ein Fassungsvermögen von höchstens 12 m³ aufweist.

4. Erdspeichertank nach einem der vorhergehenden Ansprüche, **dadurch gekennzeichnet, dass** das Gehäuse (12) einen Außendurchmesser von höchstens 2,5 m aufweist.

5. Erdspeichertank nach Anspruch 1, **dadurch gekennzeichnet, dass** das Gehäuse (12) in der Art einer Fertiggaragenhülle ausgebildet ist.

6. Erdspeichertank nach Anspruch 1 oder 5, **dadurch gekennzeichnet, dass** das Gehäuse (12) ein Fassungsvermögen von höchstens 38 m³ aufweist.

7. Erdspeichertank nach einem der Ansprüche 5 bis 6, **dadurch gekennzeichnet, dass** das Gehäuse (12) eine Länge von etwa 6,5 m, eine Breite von etwa 2,5 m und eine Höhe von etwa 2,2 m aufweist.

8. Erdspeichertank nach einem der vorhergehenden Ansprüche, **dadurch gekennzeichnet, dass** das Gehäuse (12) wenigstens eine Öffnung (40, 42) zur Durchführung eines Vorlaufs (104, 204, 304) und eines Rücklaufs (106, 206, 306) für wenigstens ein Wärmeträgermedium (102, 202, 302) wenigstens einer Wärmetauscheranordnung (100, 200, 300) aufweist.

9. Erdspeichertank nach einem der vorhergehenden Ansprüche, **dadurch gekennzeichnet, dass** die erste Wärmetauscheranordnung (100) axial übereinander angeordnete Ebenen (110) von konzentrisch gewundenen Wärmeübertragern (100W) umfasst.

10. Erdspeichertank nach einem der vorhergehenden Ansprüche, **dadurch gekennzeichnet, dass** die zweite Wärmetauscheranordnung (200) eine Auffangvorrichtung (218) für Kondensat aufweist.

11. Erdspeichertank nach einem der vorhergehenden Ansprüche, **dadurch gekennzeichnet, dass** in einem Vorlauf (204) der zweiten Wärmetauscheranordnung (200) eine Kopplungseinrichtung für eine Fördereinrichtung (210) vorgesehen ist.

12. Erdspeichertank nach einem der vorhergehenden Ansprüche, **dadurch gekennzeichnet, dass** die zweite und/oder dritte Wärmetauscheranordnung (200, 300) wenigstens bereichsweise an einer Innenseite (18) des Gehäuses (12) und/oder dass die zweite und/oder dritte Wärmetauscheranordnung (200, 300) wenigstens bereichsweise innerhalb einer Gehäusewand des Gehäuses (12) angeordnet ist.

13. Erdspeichertank nach einem der vorhergehenden Ansprüche, **dadurch gekennzeichnet, dass** das Gehäuse (12) wenigstens eine Einrichtung zum Befestigen einer Transportsicherung aufweist.

14. Verwendung einer Regenwasserzisterne als Erdspeichertank (10), insbesondere nach einem der vorhergehenden Ansprüche.

15. Verwendung einer Hülle einer Fertiggarage als Erdspeichertank (10), insbesondere nach einem der Ansprüche 1 bis 13.
